# EUROPEAN PATENT APPLICATION

(11) **EP 2 127 532 A1**
(43) Date of publication of application: **02.12.2009**
(21) Application number: 08720854.2
(22) Date of filing: 26.02.2008
(51) Int. Cl.: A23D 9/06, A23D 9/00

(54) **OIL AND FAT COMPOSITION IN CONTAINER**

(30) Priority: 28.02.2007 JP 2007049010
(71) Applicant: The Nisshin OilliO Group, Ltd., Tokyo 104-8285 (JP)
(72) Inventor: KAMEGAI, Takeshi, Yokosuka-shi Kanagawa 239-0832 (JP); SHIMADA, Hatsumi, Yokosuka-shi Kanagawa 239-0832 (JP); IKUINA, Junichi, Yokosuka-shi Kanagawa 239-0832 (JP)
(74) Representative: Zimmermann & Partner
(86) International application number: PCT/JP2008/053266
(87) International publication number: WO 2008/105399

(57) **Abstract**

The present invention discloses a fat and oil composition in a container obtained by filling a fat and oil composition comprising soybean oil and palm olein in a container,
wherein a ratio of the palm olein per 100 parts by mass of the soybean oil is 33-100 parts by mass,
the palm olein has an iodine value of 65 or more and a clouding point of 5°C or less, the constituent fatty acids of the palm olein comprise 0-4 mass% of myristic acid, 25-38 mass% of palmitic acid, 0.5-6 mass% of stearic acid, 40-60 mass% of oleic acid and 8-18 mass% of linoleic acid, and
at least a part of the container is formed of a light transmissive material. This fat and oil composition in a container generates less flavor reversion derived from soybean oil that is induced when the composition is maintained in the presence of light such as irradiation in usual display sales, and said composition comprises soybean oil at a high rate.

## Description

### Technical Field of the Invention

The present invention relates to a fat and oil composition in a container obtained by filling a cooking fat and oil in a light transmissive container. More specifically, it relates to a cooking fat and oil in a container obtained by filling a cooking fat and oil in a container distributed in the market, particularly the container that individual consumers purchase, which easily transmits light such as fluorescent light.

### Background of the Invention

The ranking of the demand for cooking fats and oils in Japan in fiscal 2003 is: 840,000 tons of Rapeseed oil(canola oil); 720,000 tons of soybean oil; and then 350,000 tons of palm oil. Soybean oil is a fat and oil produced most in the world, and 32.5 million tons of soybean oil is produced in 2005.

Rapeseed oil (Canola oil) is often used as salad oil for home use and generally used as a blending oil with soybean oil. However, recent years, taking advantage of characteristic light flavor and high stability thereof, a product comprising Rapeseed oil (canola oil) only is marketed under the name of "Canola" and accepted by consumers, and the demand therefor increases.

Meanwhile, it is often said that the green beany flavor of soybean oil is uncomfortable, the flavor which is called "flavor reversion" (hereinafter also referred to as "flavor reversion derived from soybean oil"). It is thought that light induces the emission of this flavor reversion, and though various causative substances such as a linolenic acid and a furan acid are presumed, it has not yet been specified. Accordingly, since it is difficult to solve the above problem, when a container is transparent and transmits light, there is a problem that a cooking fat and oil comprising soybean oil at a high rate cannot guarantee the quality that it is tastable. This becomes one of the reasons that the domestic demand for soybean oil does not increase though it is produced in large quantities in the world.

In order to prevent the emission of the above flavor, soybean oil or a fat and oil composition comprising soybean oil at a high rate is usually filled in a metallic light-resistant container (for example, a tin can and a cylindrical can) and distributed in the market. However, there is a problem that a metallic light-resistant container is very heavy and hard to be used. Further, since it is impossible to see through said container, there are problems that it is inconvenient that a remaining amount thereof cannot be seen and that said container lacks safety. Particularly, it is pointed out that metallic 400-1500mL containers are difficult to be used as a container for home use.

Generally, it is common that soybean oil is marketed as a mixed fat and oil of soybean oil and Rapeseed oil under the name of salad oil. However, when the rate of soybean oil in the mixed fat and oil increases, it develops the problem that the emission of the above flavor is induced by light. In this regard, it has already been disclosed that, when filling salad oil in a wrapping material of a cooking fat and oil for home use (for example, a PET container) and distributing them in the market, a blending ratio of the salad oil is adjusted since "flavor reversion" is induced by light (Non-patent Literature 1).

Further, technologies relating to a cooking fat and oil filled in a container that highly barriers oxygen are also proposed (Patent Literatures 1 and 2). However, these technologies do not solve the problem that light induces the emission of uncomfortable flavor reversion characteristic of soybean oil.
Patent Literature 1: JP-A 2004-292052
Patent Literature 2: JP-A 2005-027505
Non-patent Literature 1: Yushi (Fats and Oils), 1997, vol. 50, No. 5, p.41-50

### Disclosure of the Invention

The object of the present invention is, in view of the above problem, to provide a fat and oil composition in a container obtained by filling a fat and oil comprising soybean oil at a high rate in a light transmissive container, and said fat and oil which generates less flavor reversion derived from soybean oil that is induced when the fat and oil is maintained in the presence of light such as irradiation in usual display sales.

The inventors thoroughly searched to solve the problem and found that a fat and oil composition filled in a light transmissive container wherein a specific palm olein is added to soybean oil at a specific ratio generates less flavor reversion derived from soybean oil that is induced when it is maintained in the presence of light, as compared to a fat and oil composition filled in a light transmissive container wherein other fat and oil is added to soybean oil. The present invention has been completed based on this finding.

Namely, the present invention provides a fat and oil composition in a container obtained by filling a fat and oil composition comprising soybean oil and palm olein in a container,
wherein aratio of the palm olein per 100 parts by mass of the soybean oil is 33-100 parts by mass,
the palm olein has an iodine value of 65 or more and a clouding point of 5°C or less, the constituent fatty acids of the palm olein comprise 0-4 mass% of myristic acid, 25-38 mass% of palmitic acid, 0.5-6 mass% of stearic acid, 40-60 mass% of oleic acid and 8-18 mass% of linoleic acid, and
at least a part of the container is formed of a light transmissive material.

The present invention also provides an inhibitor of flavor reversion which is induced when light is irradiated to soybean oil, which consists of palm olein.

The present invention further provides a method for inhibiting the emission of flavor reversion of the soybean oil that is induced when light is irradiated to a container, which comprises the step of adding palm olein to soybean oil in the container at least a part of which is formed of a light transmissive material.

The fat and oil composition in a container of the present invention generates less flavor reversion derived from soybean oil that is induced when the composition is maintained in the presence of light as compared to: (a) a fat and oil composition obtained by filling soybean oil only (100%) in a light transmissive container; or (b) a fat and oil composition obtained by filling a fat and oil composition comprising soybean oil and rapeseed oil at mass ratio of 40-90:60-10 in a light transmissive container. Namely, since the composition of the present invention generates less flavor reversion derived from soybean oil that is induced when it is maintained in the presence of light such as irradiation in usual display sales, it is possible to fill it in a light transmissive container and sell large quantities of soybean oil to consumers.

### Best Mode for Carrying out the Invention

In the present invention, 33-100 parts by mass of palm olein are combined per 100 parts by mass of soybean oil.

### (Soybean oil)

"Soybean oil" used in the present invention is not particularly limited, and it is possible to use soybean oil produced by the ordinary method. Soybean oil is usually produced by the method comprising the steps of extracting soybeans by a solvent(s); and purifying the soybeans by degumming, deacidification, decoloring, dewaxing (as needed) and deodorizing. Examples of the purification method include chemical purification and physical purification, and either of them is usable.

The fatty acid composition in soybean oil is not particularly limited, and, for example, it is possible to use soybean oil obtained from soybeans wherein a linolenic acid content is lowered by hybridization (a low linolenic acid containing soybean oil). The presence or absence of trans-fatty acids in soybean oil is not particularly limited.

The place of origin of soybeans which are a raw material is not particularly limited, and it is possible to use those made in the U.S., South America, or the like.

### (Palm olein)

"Palm olein" used in the present invention has an iodine value of 65 or more and a clouding point of 5°C or less, and the constituent fatty acids of palm olein comprise 0-4 mass% of myristic acid, 25-38 mass% of palmitic acid, 0.5-6 mass% of stearic acid, 40-60 mass% of oleic acid and 8-18 mass% of linoleic acid.

In the above, the iodine value thereof is preferably 67 or more and more preferably 70 or more, and the value is also preferably 80 or less. The clouding point is preferably 5°C to around -2°C. It is preferable that the constituent fatty acids of palm olein comprise 0-3 mass% of myristic acid, 26-35 mass% of palmitic acid, 1.5-4 mass% of stearic acid, 46-56 mass% of oleic acid and 12-16 mass% of linoleic acid; and that the myristic acid content in the constituent fatty acids of palm olein is less than the stearic acid content therein, and the palmitic acid content therein is less than the oleic acid content therein. It is particularly preferable that the constituent fatty acids of palm olein comprise 0.1-2 mass% of myristic acid, 26-32 mass% of palmitic acid, 1.5-3.4 mass% of stearic acid, 48-56 mass% of oleic acid and 12-16 mass% of linoleic acid. Further, it is also preferable that a total of myristic acid, palmitic acid, stearic acid, oleic acid and linoleic acid is 90 mass% or more, more preferably 95 mass% or more and particularly preferably 95-99 mass%.

An iodine value can be easily measured in accordance with Standard Methods for the Analysis of Fats, Oils and Related Materials 2.3.4.1-1996 (Japan Oil Chemists' Society), for example. A clouding point can also be easily measured in accordance with Standard Methods for the Analysis of Fats, Oils and Related Materials 2.2.7-1996 (Japan Oil Chemists' Society), for example. Further, the fatty acid composition can be easily measured in accordance with Standard Methods for the Analysis of Fats, Oils and Related Materials 2.4.2.2-1996 (Japan Oil Chemists' Society), for example.

Further, as for palm olein used in the present invention, it is preferable that an amount of disaturated monounsaturated fatty acid glycerides in triacylglycerols constituting palm olein is 35 mass% or less (more preferably 32-15 mass%, 32-20 mass%), and that an amount of monosaturated diunsaturated fatty acid glycerides is 50 mass% or more (more preferably 55-75 mass%, 55-70 mass%). In addition to it, it is preferable that an amount of triunsaturated fatty acid glycerides is 5 mass% or more (more preferably 5-15 mass%).

Among them, it is preferable that an amount of P2O (a triacylglycerol comprising two palmitic acids and one oleic acid as fatty acids) which is a disaturated monounsaturated fatty acid glyceride in triacylglycerols constituting palm olein is 20 mass% or less (more preferably 15-5 mass%). It is also preferable that an amount of PO2 (a triacylglycerol comprising one palmitic acid and two oleic acids as fatty acids) which is a monosaturated diunsaturated fatty acid glyceride in triacylglycerols constituting palm olein is 30 mass% or more (more preferably 35-50 mass%).

It is possible to easily measure each amount of P2O, PO2, disaturated monounsaturated fatty acid glycerides, monosaturated diunsaturated fatty acid glycerides and triunsaturated fatty acid glycerides in triacylglycerols constituting palm olein by the method such as gas chromatography measurement (in accordance with JAOCS, vol.70, 11, 1111-1114 (1993)), for example.

The above palm olein can be obtained by fractionating palm oil. More specifically, the clusters of oil palm are treated with steam and compressed to produce oil thereof. The produced oil is centrifuged to remove fibers and impurities and dried. Then, the oil is purified by degumming, deacidification, decoloring and deodorizing. Examples of the purification method include chemical purification and physical purification, and either of them is usable.

Since palm oil is semisolid and semiliquid at ordinary temperature, fractionation is conducted to it depending on the use thereof, and the oil is often used as thus obtained fractionated oil.

The fractionation method of palm oil for obtaining palm olein is not particularly limited, and natural fractionation by cooling is usually used. It is also possible to use the fractionation method with a surfactant or a solvent. Palm olein is a medium-melting-point part or a low-melting-point part each of which is obtained by fractioning palm oil (a high-melting-point part is generally referred to as palm stearin). This fractionation can be conducted twice or three times, and a low-melting-point part obtained by fractionating several times can be used.

### (Parts by mass of palm olein and soybean oil)

Palm olein per 100 parts by mass of soybean oil is 33-100 parts by mass, preferably 33-82 parts by mass and more preferably 33-67 parts by mass. Palm olein is further more preferably 33-54 parts by mass, and particularly preferably 33-43 parts by mass. It is also preferable that palm olein per 100 parts by mass of soybean oil is 40-100 parts by mass.

In the present invention, it is preferable that a content of soybean oil is 50 mass% or more in the fat and oil composition, and more preferably 55 mass% or more and further more preferably 60 mass% or more. Further, the content of soybean oil is preferably 65 mass% or more and particularly preferably 70 mass% or more. Besides, it is particularly preferable that palm olein per 100 parts by mass of soybean oil is 33-54 parts by mass and the content of soybean oil in the fat and oil composition is 65 mass% or more. In addition, when defining a sum of the content of soybean oil and the content of palm olein in the fat and oil composition as 100 mass%, the content of soybean oil is preferably 65-75 mass% or 70-75 mass% therein.

The fat and oil composition of the present invention preferably comprises a mixture of soybean oil and palm olein.

In ratios, 33 parts by mass of palm olein per 100 parts by mass of sobyean oil basically indicate soybean oil:palm olein = 75:25 (mass ratio, hereinafter same as above); 43 parts by mass of palm olein per 100 parts by mass of sobyean oil indicate soybean oil:palm olein = 70:30; and 54 parts by mass of palm olein per 100 parts by mass of sobyean oil indicate soybean oil:palm olein = 65:35. Further, 100 parts by mass of palm olein per 100 parts by mass of sobyean oil indicate soybean oil:palm olein = 50:50.

### (Mixing)

The method for producing a fat and oil composition comprising soybean oil and palm olein is not particularly limited, and the composition can be usually produced by the method comprising the steps of mixing soybean oil and palm olein, and stirring them until they become equally combined.

When mass-producing the composition, in order to make it easier to be mixed, it is possible to heat palm olein or an additive(s) (an emulsifying agent) to, for example, 40°C, and to mix and stir them with soybean oil.

### (Light transmissive container)

As for a container used in the present invention, it is possible to use a container at least a part of which is formed of a light transmissive material. Examples of such a container include a transparent or translucent container to which light shielding is not treated, namely, a light transmissive container. Examples of the transparent container include a container of marketed "Nisshin Rapeseed Oil Healthy Light" produced by The Nisshin OilliO Group, Ltd. Examples of the translucent container include a container of marketed "Nisshin Salad Oil" produced by The Nisshin OilliO Group, Ltd.

A container is preferably a container of a cooking fat and oil for home use in display sales, for example, a 200-2000g plastic container, and particularly preferably a 600-1650g plastic container.

### (Other components)

It is possible to comprise other components in the fat and oil composition of the fat and oil composition in a container of the present invention in addition to soybean oil and palm olein to the extent that they do not impair the effects of the present invention. These components include those used in usual cooking fats and oils such as food additives. Examples thereof include antioxidants, crystal modifiers and texture improving agents.

Examples of the antioxidants include tocopherols, flavone derivatives, a kojic acid, gallic acid derivatives, catechin and the esters thereof, a fukiic acid, gossypol, sesamol and terpenes. Examples of crystal modifiers include polyglycerol esters of fatty acids, sucrose esters of fatty acids, sorbitan esters of fatty acids, polysorbate, condensed ricinolate esters of fatty acids and glyceride esters.

Besides, it is also possible to add spices or coloring components to the fat and oil composition. Examples of spices include capsaicin, anethole, eugenol, cineole and zingerone. Examples of coloring components include carotene and astaxanthin.

The fat and oil composition in a container of the present invention can be marketed and sold on display for a long period of time. Particularly, the composition can be sold on display in the presence of light of illuminance 1000 Lux or more (400 Lux or more according to the angle of the light).

The fat and oil composition in a container of the present invention can be used for various usages. For example, it is possible to use the composition for stir-fries such as fried noodles and stir-fried vegetables; fries such as tempura, croquettes and pork cutlet; spray (spraying the oil to foods and heating them in the oven or microwave oven); demolding oil; mayonnaise; and dressing.

### Examples

Next, Examples and Comparative Examples will further illustrate the present invention. They only explain the present invention and do not particularly limit the invention.

"%" mentioned below indicates mass% if there is no specific description. Further, if there is no specific description, trade name "Nisshin Soybean Salad Oil" by The Nisshin OilliO Group, Ltd. is used as soybean oil, trade name "Nisshin Rapeseed Salad Oil" by The Nisshin OilliO Group, Ltd. is used as canola oil, and trade name "Nisshin Corn Oil" by The Nisshin OilliO Group, Ltd. is used as corn oil.

Meanwhile, used palm olein A, B and C have the following characteristics.

| | palm olein A | palm olein B | palm olein C |
|---|---|---|---|
| iodine value | 65 | 67 | 70 |
| clouding point | 3.5-2.5°C | 0.8-0°C | 0.3- -1°C |
| myristic acid | 1.1 mass% | 1.0 mass% | 1.0 mass% |
| palmitic acid | 33.5 mass% | 31.4 mass% | 29.3 mass% |
| stearic acid | 3.6 mass% | 3.1 mass% | 3.1mass% |
| oleic acid | 47.1 mass% | 49.2 mass% | 51.3 mass% |
| linoleic acid | 12.7 mass% | 13.7 mass% | 13.8 mass% |
| disaturated monounsaturated | 33.1 mass% | 31.3 mass% | 21.6 mass% |
| monosaturated diunsaturated | 57.6 mass% | 58.4 mass% | 67.3 mass% |
| triunsaturated | 8.2 mass% | 8.9 mass% | 10.2 mass% |
| P2O | 16.6 mass% | 12.5 mass% | 9 mass% |
| PO2 | 35.7 mass% | 38.7 mass% | 42.2 mass% |

In the table, "disaturated monounsaturated" indicates disaturated monounsaturated fatty acid glycerides; "monosaturated diunsaturated" indicates monosaturated diunsaturated fatty acid glycerides; and "triunsaturated" indicates triunsaturated fatty acid glycerides. Further, P2O indicates a triacylglycerol comprising two palmitic acids and one oleic acid as fatty acids, and PO2 indicates a triacylglycerol comprising one palmitic acid and two oleic acids as fatty acids.

The characteristic values in the table were measured by the following methods.

### Iodine value

The above value was measured in accordance with the method of "Standard Methods for the Analysis of Fats, Oils and Related Materials 2.3.4.1-1996 (Japan Oil Chemists' Society)".

### Clouding point

The above value was measured in accordance with the method of "Standard Methods for the Analysis of Fats, Oils and Related Materials 2.2.7-1996 (Japan Oil Chemists' Society)".

### Constituent fatty acids of palm olein

The above values were measured in accordance with the method of "Standard Methods for the Analysis of Fats, Oils and Related Materials 2.4.2.2-1996 (Japan Oil Chemists' Society)".

### Disaturated monounsaturated fatty acid glycerides et al.

The above values were measured in accordance with gas chromatography measurement (JAOCS, vol.70, 11, 1111-1114 (1993)).

HP6890 (produced by Agilent Technologies K.K.) was used as the gas chromatography. 007-65HT (15m × 0.25mmI.D. × 0.1 µ m) (produced by Quadrex) was used as the column, and the measurement was conducted under the temperature condition of 350°C (1°C/min.) to 360°C. Fig.2 of JAOCS, vol.70, 11, 1111-1114 (1993) was referred to as the analytical condition and attribution of peaks. The relative proportions were indicated as area% defining a total area on the chromatograph as 100.

After the fatty acid triglyceride composition such as P2O and PO2 amounts was measured by the above method, a sum of an ingredient amount corresponding to each component was figured out to calculate each amount of disaturated monounsaturated fatty acid glycerides, monosaturated diunsaturated fatty acid glycerides, and triunsaturated fatty acid glycerides.

### (Method for producing a mixed fat and oil)

A specific amount of soybean oil was weighed on the scale, and a specific amount of either one kind of rapeseed oil (canola oil), corn oil or palm olein was also weighed on the scale. Then, both of them were poured in an agitator and sufficiently stirred by mixing.

Since other components such as additives are not poured in this mixed fat and oil, "a ratio of a sum of soybean oil and palm olein in the fat and oil composition (mass of the sum of soybean oil and palm olein/mass of the fat and oil composition)" is 100%.

### (Method for filling a mixed fat and oil)

The mixed fat and oil was filled in a 1000g transparent container to which light shielding is not treated so that the content becomes 1000g. This transparent container to which light shielding is not treated is the same one as that of "Nisshin Rapeseed Oil Healthy Light" produced by The Nisshin OilliO Group, Ltd.

### [Experimental Example 1] (Examination on a mixed fat and oil of soybean oil and rapeseed oil (canola oil))

### (Experimental Method)

A mixed fat and oil of soybean oil and rapeseed oil (canola oil) was prepared in accordance with the proportion in Table 1. Then, the emission of flavor reversion derived from soybean oil that is induced when the fat and oil is maintained in the presence of light was evaluated in accordance with the following method. Table 1 shows the results thereof.

### (Method for evaluating the flavor reversion derived from soybean oil)

The container to which light shielding is not treated that contains a mixed fat and oil was exposed to light of illuminance 7000 Lux for 24 hours. Then, 50g of the mixed fat and oil was weighed on the scale and poured in 100mL beaker, and heated in a block heater until the oil temperature rose to 180 °C. After the flavor thereof was sufficiently emitted, the flavor reversion was evaluated by sniffing.

### (Evaluation method)

20 panelists judged the degree of the flavor reversion based on the degree of 100% soybean oil (Test Example 7) on a scale of 1 to 5 in accordance with the following evaluation standards. When the average of 20 panelists' points is 4.5 or more, such a fat and oil is evaluated as A; when it is 4 or more, it is evaluated as B; when 3 or more, it is evaluated as C; when 2 or more, it is evaluated as D; and when 1 or more, it is evaluated as E.

When the fat and oil is evaluated as B or better, it means that the flavor reversion derived from soybean oil is improved.

### [Evaluation standards]

5: feeling almost no flavor reversion derived from soybean oil
4: feeling some flavor reversion derived from soybean oil, but not uncomfortable
3: feeling flavor reversion derived from soybean oil, but not uncomfortable
2: obviously feeling flavor reversion derived from soybean oil, and almost unacceptable
1: strongly feeling flavor reversion derived from soybean oil, and unacceptable

The common composition values of fatty acids and triacylglycerols in rapeseed oil (canola oil) are indicated below. The clouding point of liquid oil such as canola oil and corn oil is -13 to -5°C.

| | Rapeseed oil (Canola oil) |
|---|---|
| Iodine value | 118 |
| Myristic acid | less than detection limit |
| Palmitic acid | 3.9 mass% |
| Stearic acid | 1.6 mass% |
| Oleic acid | 62 mass% |
| Linoleic acid | 21 mass% |
| disaturated monounsaturated | 0.8 mass% |
| monosaturated diunsaturated | 18 mass% |
| P2O | 0.2 mass% |
| PO2 | 5.3 mass% |

In the table, "disaturated monounsaturated" indicates disaturated monounsaturated fatty acid glycerides, and "monosaturated diunsaturated" indicates monosaturated diunsaturated fatty acid glycerides. Further, P2O indicates a triacylglycerol comprising two palmitic acids and one oleic acid as fatty acids, and PO2 indicates a triacylglycerol comprising one palmitic acid and two oleic acids as fatty acids.

**Table 1**

| Test Example | 1 | 2 | 3 | 4 | 5 | 6 | 7 |
|---|---|---|---|---|---|---|---|
| Soybean oil (%) | 40 | 50 | 60 | 70 | 80 | 90 | 100 |
| Canola oil (%) | 60 | 50 | 40 | 30 | 20 | 10 | 0 |
| Evaluation point | B | C | C | E | E | E | E |

As indicated in Table 1, when combining 60% or more of rapeseed oil (canola oil), the flavor reversion derived from soybean oil was improved. On the other hand, when combining 50% or more of soybean oil, the flavor reversion derived from soybean oil was not improved. Thus, it was clarified that it is difficult to use a fat and oil comprising 50% or more of soybean oil filled in a container to which light shielding is not treated in the presence of light in display sales and the like.

### [Experimental Example 2] (Examination on a mixed fat and oil of soybean oil and corn oil)

### (Experimental Method)

A mixed fat and oil was prepared in accordance with the kind of oils and proportions in Table 2, and evaluated by the same method as above "Evaluation method of Experimental Example 1". Table 2 shows results thereof.

The common composition values of fatty acids and triacylglycerols in corn oil are indicated below. The clouding point of liquid oil such as rapeseed oil (canola oil) and corn oil is -13 to -5°C.

| Corn oil | |
|---|---|
| Iodine value | 88-147 |
| Myristic acid | 0.1 mass% |
| Palmitic acid | 10.7 mass% |
| Stearic acid | 1.9 mass% |
| Oleic acid | 28.4 mass% |
| Linoleic acid | 55.6 mass% |
| disaturated monounsaturated | 3.4 mass% |
| monosaturated diunsaturated | 21.9 mass% |
| P2O | 0.7 mass% |
| PO2 | 2.9 mass% |

In the table, "disaturated monounsaturated" indicates disaturated monounsaturated fatty acid glycerides, and "monosaturated diunsaturated" indicates monosaturated diunsaturated fatty acid glycerides. Further, P2O indicates a triacylglycerol comprising two palmitic acids and one oleic acid as fatty acids, and PO2 indicates a triacylglycerol comprising one palmitic acid and two oleic acids as fatty acids.

**Table 2**

| Test Example | 8 | 9 |
|---|---|---|
| Soybean oil (%) | 50 | 70 |
| Corn oil (%) | 50 | 30 |
| Evaluation point | C | D |

As indicated in Table 2, though 50% or more of corn oil was combined, the flavor reversion was not improved.

### [Experimental Example 3] (Examination on a mixed fat and oil of soybean oil and palm olein)

### (Experimental Method)

A mixed fat and oil was prepared in accordance with the kind of oils and proportions in Table 3, and the flavor reversion derived from soybean oil was evaluated when the fat and oil was maintained in the presence of light. Evaluation 1 was conducted by the same method as above "Evaluation method of Experimental Example 1". Evaluation 2 was conducted by the same method as above "Evaluation method of Experimental Example 1" except that the condition of maintaining the fat and oil in the presence of light was replaced from "illuminance 7000 Lux for 24 hours" to "illuminance 3000 Lux for 24 hours". Evaluation 3 was conducted by the same method as above "Evaluation method of Experimental Example 1" except that the condition of maintaining the fat and oil in the presence of light was replaced from "illuminance 7000 Lux for 24 hours" to "illuminance 1000 Lux for 1 week". Table 3 shows results thereof.

**Table 3**

| Test Example | maintaining cond. | 10 | 11 | 12 |
|---|---|---|---|---|
| Soybean oil (%) | -- | 70 | 80 | 90 |
| Palm olein A (%) | -- | 30 | 20 | 10 |
| Parts by weight of palm olein per 100parts by weight of soybean oil | -- | 42.9 | 25 | 11.1 |
| Evaluation point 1 | 7000 Lux, 24 hrs. | A | C | E |
| Evaluation point 2 | 3000 Lux, 24 hrs. | A | C | D |
| Evaluation point 3 | 1000 Lux, 1 week | A | D | E |

As indicated in Table 3, when adding 30% or more of palm olein A, the flavor reversion derived from soybean oil was dynamically improved.

### [Experimental Example 4] (Examination on a mixed fat and oil of 75% soybean oil and 25% palm olein A)

Reviewing the results of Experimental Example 3, a mixed fat and oil of 75% soybean oil and 25% palm olein A was prepared. Then, the same test, evaluations 1 and 2 as those of Experimental Example 3 were conducted thereto. Table 4 shows results thereof.

**Table 4**

| Test Example | 13 |
|---|---|
| Soybean oil (%) | 75 |
| Palm olein A (%) | 25 |
| Parts by weight of palm olein per 100parts by weight of soybean oil | 33.3 |
| Evaluation point 1 | B |
| Evaluation point 2 | B |

As indicated in Table 4, when adding 25% or more of palm olein A, the flavor reversion derived from soybean oil was improved.

As mentioned above, it was clarified that it is possible to use a fat and oil comprising 25% or more (preferably 30% or more) of palm olein A filled in a container to which light shielding is not treated in the presence of light in display sales and the like.

### Example 2

### [Experimental Example 5] (Examination using palm olein B and C)

### (Experimental Method)

A mixed fat and oil is prepared in accordance with the kind of oils and proportions in Table 5, and evaluated by the same method as above "Evaluation method of Experimental Example 1". Table 5 shows results thereof.

**Table 5**

| Test Example | 14 | 15 |
|---|---|---|
| Soybean oil (%) | 70 | 70 |
| Palm olein B (%) | 30 | -- |
| Palm olein C (%) | -- | 30 |
| Parts by weight of palm olein per 100parts by weight of soybean oil | 42.9 | 42.9 |
| Evaluation point | A | A |

As indicated in Table 5, when adding 30% of palm olein B or C, the flavor reversion derived from soybean oil is dynamically improved.

## Claims

1. A fat and oil composition in a container obtained by filling a fat and oil composition comprising soybean oil and palm olein in a container,
wherein a ratio of the palm olein per 100 parts by mass of the soybean oil is 33-100 parts by mass,
the palm olein has an iodine value of 65 or more and a clouding point of 5°C or less, the constituent fatty acids of the palm olein comprise 0-4 mass% of myristic acid, 25-38 mass% of palmitic acid, 0.5-6 mass% of stearic acid, 40-60 mass% of oleic acid and 8-18 mass% of linoleic acid, and
at least a part of the container is formed of a light transmissive material.

2. The fat and oil composition in a container according to claim 1, wherein the content of the soybean oil is 50 mass% or more.

3. The fat and oil composition in a container according to claim 1 or 2, wherein the palm olein per 100 parts by mass of soybean oil is 33-54 parts by mass and the content of the soybean oil is 65 mass% or more.

4. The fat and oil composition in a container according to any one of claims 1-3, which comprises a mixture of soybean oil and palm olein.

5. The fat and oil composition in a container according to any one of claims 1-4, wherein the iodine value of the palm olein is 80 or less.

6. The fat and oil composition in a container according to any one of claims 1-5, wherein the myristic acid content in the constituent fatty acids of the palm olein is less than the stearic acid content therein, and the palmitic acid content therein is less than the oleic acid content therein.

7. The fat and oil composition in a container according to any one of claims 1-6, wherein an amount of disaturated monounsaturated fatty acid glycerides in triacylglycerols constituting palm olein is 35 mass% or less, and an amount of monosaturated diunsaturated fatty acid glycerides is 50 mass% or more.

8. The fat and oil composition in a container according to any one of claims 1-7, wherein an amount of P2O (a triacylglycerol comprising two palmitic acids and one oleic acid as fatty acids) that is a disaturated monounsaturated fatty acid glyceride in triacylglycerols constituting palm olein is 20 mass% or less.

9. The fat and oil composition in a container according to any one of claims 1-8, wherein an amount of PO2 (a triacylglycerol comprising one palmitic acid and two oleic acids as fatty acids) that is a monosaturated diunsaturated fatty acid glyceride in triacylglycerols constituting palm olein is 30 mass% or more.

10. The fat and oil composition in a container according to any one of claims 1-9, wherein the container is a transparent or translucent container to which light shielding is not treated.

11. The fat and oil composition in a container according to any one of claims 1-10, which is used in display sales in the presence of light.

12. An inhibitor of flavor reversion which is induced when light is irradiated to soybean oil, which consisting of palm olein.

13. A method for inhibiting the emission of flavor reversion of the soybean oil that is induced when light is irradiated to a container, which comprises the step of adding palm olein to soybean oil in the container at least a part of which is formed of a light transmissive material.
